# EUROPÄISCHE PATENTSCHRIFT

(11) **EP 3 758 990 B1**
(45) Veröffentlichungstag und Bekanntmachung des Hinweises auf die Patenterteilung: **16.03.2022**
(21) Anmeldenummer: 19720409.2
(22) Anmeldetag: 10.04.2019
(51) Int. Cl.: B60T 17/08, B61H 5/00, B61H 13/00, B60T 13/68

(54) **NOTLÖSEEINRICHTUNG FÜR EINE FEDERSPEICHERBREMSE EINES SCHIENENFAHRZEUGS**
EMERGENCY RELEASE ARRANGEMENT FOR A SPRING-LOADED BRAKE OF A RAIL VEHICLE
DISPOSITIF DE DÉBLOCAGE D'URGENCE D'UN FREIN À RESSORT D'UN VÉHICULE FERROVIAIRE

(30) Priorität: 11.04.2018 AT 503082018
(43) Veröffentlichungstag der Anmeldung: 06.01.2021
(73) Patentinhaber: Siemens Mobility Austria GmbH, 1210 Wien (AT)
(72) Erfinder: HÖRMANN, Christoph, 1160 Wien (AT)
(74) Vertreter: Deffner, Rolf
(86) Internationale Anmeldenummer: PCT/EP2019/059058
(87) Internationale Veröffentlichungsnummer: WO 2019/197453

(56) Entgegenhaltungen:
- EP-A1- 0 089 081
- CH-A- 549 490
- DE-A1- 3 531 896
- US-A- 4 799 355

## Beschreibung

### Technisches Gebiet

Die Erfindung betrifft eine Notlöseeinrichtung für eine Federspeicherbremse eines Schienenfahrzeugs.

### Stand der Technik

Schienenfahrzeuge, insbesondere Straßenbahnen, sind häufig mit sogenannten Federspeicherbremsen ausgestattet, welche mittels Federdruck Bremsbeläge an Bremsscheiben anpressen und das Fahrzeug somit zum Stillstand bringen bzw. im Stillstand halten. Das Lösen solcher Federspeicherbremsen erfolgt mittels hydraulischen oder pneumatischen Drucks. Diese Bremssysteme weisen den Vorteil auf, bei Bruch einer druckführenden Leitung das Fahrzeug selbsttätig abzubremsen. Versagt ein druckerzeugendes Organ, beispielsweise die Hydraulikpumpe, so können diese Bremsen nicht mehr gelöst werden. Für diesen Fall, bzw. dem Bruch einer druckführenden Leitung ist eine Notlöseeinrichtung vorgesehen, welche die Federspeicherbremse eines Fahrwerks oder eines Wagens über eine separate Notlöseeinrichtung oder mittels eines Notlöseanschlusses manuell löst und somit eine Weiterfahrt in eine Werkstatt möglich ist. Ähnliche Federspeicherbremsen sind in Lastkraftwagen gebräuchlich, wobei die Notlösung meist mittels einer manuell zu betätigenden Gewindespindel erfolgt.

Solche Einrichtungen sind auch bei Schienenfahrzeugen, insbesondere bei Straßen- und U-Bahnen im Einsatz, weisen jedoch betriebliche Nachteile auf, da sie nur unmittelbar am Bremsaktuator selbst bedienbar sind. Dazu muß der Fahrzeugführer den Fahrerstand verlassen und eine einmal gelöste Bremse kann nicht einfach und rasch wieder angelegt werden.

Oft ist gewünscht, die Notlösung unmittelbar von dem Fahrerpult oder Fahrerstand aus ausführen zu können, wobei zusätzlich auch minimale Bedienvorgänge an dem betroffenen Fahrwerk bzw. der betroffenen Bremse akzeptabel sind. Eine weitere Forderung besteht darin, ein fahrwerkselektives Notlösen vornehmen zu können, damit nur die Bremse des betroffenen Fahrwerks, bzw. Drehgestells gelöst wird und weitere Bremsen normal weiterbetrieben werden können. Dies ist insbesondere bei Straßenbahnen gefordert, welche je Fahrwerk, bzw. Drehgestell eine Druckerzeugungseinrichtung aufweisen, bei deren Defekt eben nur die Bremse dieses Fahrwerks gelöst werden soll.

Aus der europäischen Patentanmeldung EP 0 089 081 A1 ist eine hydraulische Bremsanlage für ein Schienenfahrzeug bekannt, bei welcher die Bremskraft mittels Variation der Drehzahl einer Hydraulikpumpe geregelt wird. Dabei ist auch eine hydraulische Notlösung der Bremse vorgesehen. Die in der Patentschrift CH 549 490 A vorgestellte Bremseinrichtung sieht ein Notlösen mittels einer dafür vorgesehenen Luftpumpe vor. Ein Fahrzeugbremssystem mit zwei Bremskreisen kann der Patentschrift US 4 799 355 A entnommen werden, wobei zum Lösen der Bremse bei Verlust eines Kreises eine manuell betriebene Pumpe vorgesehen ist. In der deutschen Anmeldeschrift DE 35 31 896 A1 ist ein hydraulischer Federspeicherzylinder gezeigt, welchem über eine dafür vorgesehene Bohrung Hydraulikdruck zur Notlösung zugeführt werden kann, wenn die Haupthydraulikversorgung ausgefallen ist.

### Darstellung der Erfindung

Der Erfindung liegt daher die Aufgabe zugrunde, eine Notlöseeinrichtung für eine Federspeicherbremse eines Schienenfahrzeugs anzugeben, welche selektiv eine bestimmte Bremse, bzw. Gruppe von Bremsen notlösen kann und dazu möglichst geringer manueller Bedienung bedarf.

Die Aufgabe wird durch eine Notlöseeinrichtung gemäß Anspruch 1 und ein Schienenfahrzeug nach Anspruch 7 gelöst. Vorteilhafte Ausgestaltungen sind Gegenstand untergeordneter Ansprüche.

Dem Grundgedanken der Erfindung nach wird eine Notlöseeinrichtung für eine Federspeicherbremse eines Schienenfahrzeugs aufgebaut, welche eine Hydraulikpumpe und je zu lösender Federspeicherbremse einen Hydraulikzylinder, sowie Hydraulikleitungen zwischen der Hydraulikpumpe und der Federspeicherbremse umfasst, wobei in eine zu einer Gruppe gemeinsam zu lösender Federspeicherbremsen führende Notlösehydraulikleitung zwei antiparallel geschaltete Rückschlagventile angeordnet sind, deren Ausgänge jeweils an einen Schaltanschluß eines elektromagnetisch betätigbaren 3/2-Wege-Notlöse-Selektionsventils mit Federrückstellung geführt sind, wobei der Wurzelanschluß des 3/2-Wege-Notlöse-Selektionsventils mit Federrückstellung an einen Schaltanschluß eines manuell betätigbaren 3/2-Wege-Notlöse-Absperrventil geführt ist, und wobei die Notlösehydraulikleitung über ein Rückschlagventil an den weiteren Schaltanschluß des 3/2-Wege-Notlöse-Absperrventils geführt ist, und wobei der Wurzelanschluß des 3/2-Wege-Notlöse-Absperrventils an die Hydraulikzylinder der in einer Gruppe gemeinsam zu lösenden Federspeicherbremsen geführt ist.

Dadurch ist der Vorteil erzielbar, selektiv eine bestimmte Federspeicherbremse, bzw. eine Gruppe von Federspeicherbremsen notlösen zu können, wobei keine manuellen Eingriffe oder Bedienvorgänge an den Bremsen selbst erforderlich sind und alle Bedienschritte aus einer zentralen Steuerung, vorzugsweise aus einer Fahrerkabine ausführbar sind. Ein weiterer Vorteil besteht darin, auch an Fahrzeugen mit fehlender bzw. defekter elektrischer Energieversorgung ein selektives Notlösen bestimmter Bremsen vornehmen zu können, wobei allenfalls geringe manuelle Eingriffe an der Bremsanlage, insbesondere den zugehörigen hydraulischen Ventilen selbst vorzunehmen sind.

Insbesondere ist es vorteilhaft, das elektromagnetisch betätigbaren 3/2-Wege-Notlöse-Selektionsventil mit Federrückstellung so auszuführen, dass es in stromlosen Zustand den Fluß von Hydraulikfluid zu den zu einer Gruppe gemeinsam zu lösenden Federspeicherbremsen sperrt. Dadurch ist es nur bei beabsichtigter Notlösung für die Dauer der Notlösung erforderlich, dieses Ventil zu bestromen. Dies bewirkt eine erhöhte Sicherheit der Notlösung, da die Notlösung nur bei aufrechter elektrischer Energieversorgung beibehalten wird. Bei einem Entfall der elektrischen Energieversorgung werden die Bremsen somit selbsttätig wieder angelegt.

Erfindungsgemäß umfasst die Notlöseeinrichtung eine Hydraulikpumpe zur Erzeugung des hydraulischen Drucks für die Notlösung der Federspeicherbremsen. Diese Hydraulikpumpe ist vorzugsweise mit einem elektrischen und einem manuellen Antrieb auszustatten, sodass auch bei Ausfall der Energieversorgung ein Notlösen ermöglicht wird. Dies kann einerseits mittels einer Pumpe erfolgen, welche alternativ elektrisch oder manuell betätigt werden kann, oder mittels einer zusätzlich zu einer elektrischen Pumpe vorgesehenen Handpumpe. Der durch die Hydraulikpumpe erzeugbare hydraulische Druck ist über Hydraulikleitungen (Notlöseleitung) an die notzulösenden Bremsen, bzw. Gruppen von Bremsen zu leiten.

Es ist vorteilhaft, Bremsen zu Gruppen zusammenzufassen, insbesondere jene, welche auch als Betriebsbremse eine Gruppe bilden, d.h. die Bremsen einer Achse bzw. eines Fahrwerks oder Drehgestells.

In einer Zuleitung zu einer notzulösenden Bremse oder Gruppe von Bremsen sind zwei antiparallel geschaltete Rückschlagventile anzuordnen und deren Ausgänge mit Schaltanschluß einem elektromagnetisch betätigbaren 3/2-Wege-Notlöse-Selektionsventils mit Federrückstellung zu verbinden, wobei der Ausgang des in Flussrichtung zu dem Hydraulikzylinder hin öffnende Rückschlagventils mit jenem Schaltanschluß des 3/2-Wege-Notlöse-Selektionsventils mit Federrückstellung verbunden ist, welcher bei stromlosem Zustand dieses Ventils den Hydraulikfluß sperrt. Der Wurzelanschluß (Ausgang) des 3/2-Wege-Notlöse-Selektionsventils mit Federrückstellung ist mit einem Schaltanschluß eines manuell betätigbaren 3/2-Wege-Notlöse-Absperrventil verbunden, der weitere Schaltanschluß dieses 3/2-Wege-Notlöse-Absperrventils ist unmittelbar mit der Zuleitung (Hydraulikleitung von der Hydraulikpumpe) verbunden. Der Wurzelanschluß (Ausgang) des manuell betätigbaren 3/2-Wege-Notlöse-Absperrventils ist an den, bzw. die Hydraulikzylinder geführt, welche die Notlösung der Bremse ausführen.

Das manuell betätigbare 3/2-Wege-Notlöse-Absperrventil ermöglicht es, auch bei Ausfall der elektrischen Energieversorgung eine Notlösung ausführen zu können, da mittels manueller Umschaltung dieses Ventils der Druck in der Notlöseleitung an die Notlöseeinrichtung eines Bremssattels bzw. einer Bremszange leitbar ist. Das elektromagnetisch betätigbare 3/2-Wege-Notlöse-Selektionsventil mit Federrückstellung ist dabei umgangen. Dieses manuell betätigbare 3/2-Wege-Notlöse-Absperrventil ist dabei üblicherweise in der im Wageninneren in der Nähe der zu lösenden Bremsen angeordnet, sodass für die Betätigung durch das Fahrpersonal ein Verlassen des Fahrerstandes meist unumgänglich ist, das Fahrzeug selbst jedoch nicht verlassen werden muß. Die Erzeugung des hydraulischen Drucks für die Notlösung erfolgt in dieser Betriebsart mittels der manuell betätigbaren Hydraulikpumpe, welche typischerweise im, oder in der unmittelbaren Nähe das Fahrerstandes angeordnet ist. Solcherart kann auch bei Ausfall der Energieversorgung oder bei einem defekten 3/2-Wege-Notlöse-Selektionsventil mit Federrückstellung ein selektives Notlösen einer bestimmten Bremse oder Gruppe von Bremsen vorgenommen werden.

Gegenständlicher Erfindung weist den Vorteil auf, dass nach erfolgtem Notlösen der Hydraulikdruck in der Fahrzeug- bzw. Zugweiten Notlösehydraulikleitung wieder abgebaut werden kann, was zur Schonung der Hydraulikpumpe beiträgt und verhindert, dass allfällig vorhandene Leckagen an Ventilen zu unbeabsichtigtem Lösen von Bremsen führen kann. Dies kann auch bei manuellem Notlösen erfolgen, da ein einmal in einem Bremssattel oder Bremszange aufgebauter Notlösedruck aufgrund des in der Zuleitung zu dem 3/2-Wege-Notlöse-Absperrventil vorgesehenen Rückschlagventil nicht mehr abgebaut wird wenn der Druck in der Notlöseleitung sinkt.

Ist diese Funktionalität nicht erforderlich, so kann die Notlöseleitung auch unmittelbar an den einen Schaltanschluß des 3/2-Wege-Notlöse-Absperrventils geführt werden.

In weiterer Fortbildung der Erfindung ist er empfehlenswert, je notzulösender Bremse bzw. Gruppe von Bremsen (Notlöseabschnitt) einen Druckschalter bzw. Drucksensor vorzusehen, welcher den Druck in der zu den Hydraulikzylindern führenden Lösedruckleitung ermittelt. Solcherart kann die erfolgte Notlösung erkannt und dem Fahrpersonal geeignet angezeigt werden.

Ein weiterer Vorteil gegenständlicher Notlöseeinrichtung besteht darin, dass sie erhöhte Sicherheit gegen eine unbeabsichtigte und nur sehr schwer erkennbare Selbstlösung der Federspeicherbremsen aufgrund von Undichtigkeiten in den Hydraulikzylindern der Bremsen bietet. Diese Undichtigkeiten können dazu führen, dass die Hydraulikflüssigkeit in das für die Notlösung vorgesehene Volumen des Hydraulikzylinders eindringt und auch bei Abbau des Drucks der Betriebsbremse (also einer Bremsung) nicht mehr abfließen kann. Gegenständliche Erfindung bietet hingegen den Vorteil, dass bei Auftreten einer solchen Undichtigkeit das Hydraulikfluid über die Ventile und eines der Rückschlagventile in Richtung der Notlösehydraulikpumpe abfließen kann.

### Kurzbeschreibung der Zeichnungen

Es zeigen beispielhaft:
**Fig.1** Hydraulisches Schaltbild einer Notlöseeinrichtung.
**Fig.2** Notlöseeinrichtung in Ruhestellung.
**Fig.3** Notlöseeinrichtung fernbedient gelöst.
**Fig.4** Notlöseeinrichtung in Ruhestellung.
**Fig.5** Notlöseeinrichtung manuell gelöst.
**Fig.6** Notlöseeinrichtung mit direkter Notlösedruckzuführung.

### Ausführung der Erfindung

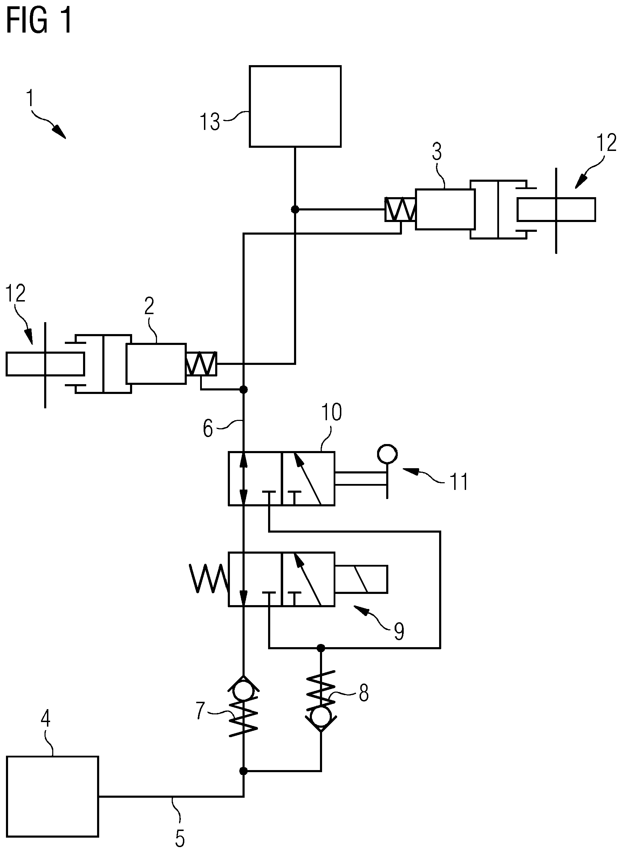

**Fig.1** zeigt beispielhaft und schematisch ein hydraulisches Schaltbild einer Notlöseeinrichtung. Es ist eine Notlöseeinrichtung 1 dargestellt, welche zur Notlösung von zwei Bremsen eingerichtet es. Dabei sind ein erster 2 und ein zweiter 3 Hydraulikzylinder vorgesehen, welche jeweils einer Bremsscheibe 12 zugeordnet sind und an diesen Bremsscheiben 12 die mittels Federkraft angepressten Bremsbeläge lösen können. Für das betriebsmäßige Lösen der Bremsen ist eine Bremshydraulikpumpe 13 vorgesehen, bei deren Versagen das Lösen der Bremsen mit der erfindungsgemäßen Notlöseeinrichtung vorgenommen werden kann. Dazu sind die Hydraulikzylinder 2, 3 beispielsweise als sogenannte Tandemzylinder ausgeführt, bei welchen zwei Kavernen für zwei Hydraulikquellen vorgesehen sind, wobei die hydraulische Kraft der beiden Hydraulikquellen jeweils auf eine gemeinsame Antriebseinheit wirkt, welche die Bremsbeläge entgegen einer Federkraft von den Bremsscheiben 12 löst. Die Notlöseeinrichtung 1 umfasst eine Hydraulikpumpe 4, welche Hydraulikfluid über eine Notlösehydraulikleitung 5 zu den gemeinsam zu lösenden Bremsen leitet. Das in Fig.1 dargestellte Ausführungsbeispiel umfasst zwei Bremsen, welche beispielsweise je einer Achse eines zweiachsigen Drehgestells zugeordnet sind. Typischerweise ist in solchen Konfigurationen die Bremshydraulikpumpe 13 je Drehgestell einmal vorhanden, sodass bei einem Ausfall dieser Bremshydraulikpumpe 13 selektiv die Bremsen eines bestimmten Drehgestells notzulösen sind. Des Weiteren umfasst die Notlöseeinrichtung 1 ein elektromagnetisch betätigbares 3/2-Wege-Notlöse-Selektionsventil mit Federrückstellung 9 und ein manuell betätigbares 3/2-Wege-Notlöse-Absperrventil 10. Dabei ist das mit einer manuell betätigbares 3/2-Wege-Notlöse-Absperrventil 10 mit einer manuellen Betätigung 11 ausgestattet, mittels welcher eine Umschaltung zwischen den beiden Stellungen dieses Ventils erfolgen kann. In den Zuleitungen zu den Schaltanschlüssen des elektromagnetisch betätigbaren 3/2-Wege-Notlöse-Selektionsventil mit Federrückstellung 9 ist je ein Rückschlagventil 7, 8 angeordnet, welche zueinander antiparallel geschaltet sind. Dabei ist ein erstes Rückschlagventil 7, welches einen Rückfluß des Hydraulikfluides in Richtung der Hydraulikpumpe 4 zulässt und Fluss in der Gegenrichtung sperrt, in der Leitung zu jenem Schaltanschluß des 3/2-Wege-Notlöse-Selektionsventil mit Federrückstellung 9 angeordnet, welcher in stromlosen Zustand dieses 3/2-Wege-Notlöse-Selektionsventil mit Federrückstellung 9 mit dem Wurzelanschluß verbunden ist. Ein zweites Rückschlagventil 8, welches einen Fluss des Hydraulikfluides in Richtung der Hydraulikzylinder 2, 3 zulässt und in der Gegenrichtung sperrt, ist in der Leitung zu jenem Schaltanschluß des 3/2-Wege-Notlöse-Selektionsventil mit Federrückstellung 9 angeordnet, welcher in stromlosen Zustand dieses 3/2-Wege-Notlöse-Selektionsventil mit Federrückstellung 9 nicht mit dem Wurzelanschluß verbunden ist. Der Wurzelanschluß des 3/2-Wege-Notlöse-Selektionsventils mit Federrückstellung 9 ist mit jenem Schaltanschluß des manuell betätigbaren 3/2-Wege-Notlöse-Absperrventil 10 verbunden, welcher in Ruhestellung dieses Ventils, welche bei einem fernbetätigten Notlösebetrieb gegeben ist, mit dem Wurzelanschluß dieses 3/2-Wege-Notlöse-Absperrventil 10 verbunden ist. Der weitere Schaltanschluß des 3/2-Wege-Notlöse-Absperrventils 10 ist über das Rückschlagventil 8 mit der Notlösehydraulikleitung 5 verbunden. Der Ausgang, d.h. der Wurzelanschluß des 3/2-Wege-Notlöse-Absperrventils 10 ist mittels einer Lösedruckleitung 6 mit den zugeordneten Hydraulikzylindern 2, 3 verbunden.

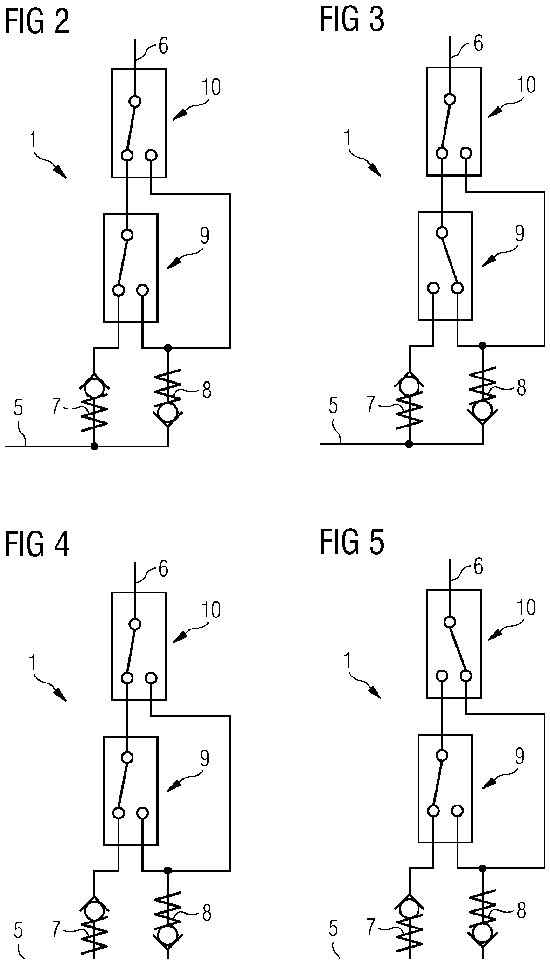

In weiterer Folge sind in den Figuren 2 bis 5 die möglichen Schaltstellungen der Ventile in den einzelnen Betriebsarten (Bremsen ungelöst, fernbedient gelöst, manuell gelöst) dargestellt.

**Fig.2** zeigt beispielhaft und schematisch die Notlöseeinrichtung 1 aus Fig.1 in stark abstrahierter Darstellung in Ruhestellung. Dabei befinden sich die Ventile 9, 10 in ihrer Grundstellung, bei welcher das 3/2-Wege-Notlöse-Selektionsventil mit Federrückstellung 9 nicht bestromt (nicht angesteuert ist) und das 3/2-Wege-Notlöse-Absperrventils 10 sich in der für ferngesteuerten Betrieb erforderlichen Position befindet. In dieser Grundstellung kann ein eventuell in der Notlösehydraulikleitung 5 auftretender Hydraulikdruck nicht zu der Lösedruckleitung 6 gelangen, da die Wege zu dieser Leitung versperrt sind. Eine alleinige unter Druck Setzung der Notlösehydraulikleitung 5 kann somit nicht zu einem unbeabsichtigten Lösen der Bremsen führen.

**Fig.3** zeigt beispielhaft und schematisch die Notlöseeinrichtung 1 aus Fig.2, wobei sich die Ventile 9, 10 in ihrer Stellung für das fernbediente Notlösen befinden. Dabei ist das 3/2-Wege-Notlöse-Absperrventils 10 in derselben Position wie in der Ruhestellung und das 3/2-Wege-Notlöse-Selektionsventil mit Federrückstellung 9 ist aktiviert (bestromt), sodass ein Weg für das Hydraulikfluid über das zweite Rückschlagventil 8 geschaltet ist. In dieser Stellung der Ventile 9, 10 kann somit ein Druck in der Lösedruckleitung 6 aufgebaut werden und die Bremsen dadurch gelöst werden. Nach erfolgtem Notlösen, d.h. Aufbau eines ausreichenden Drucks in der Lösedruckleitung 6 kann der Druck in der Notlösehydraulikleitung 5 wieder abgebaut werden, da ein Rückfluß der Hydraulikflüssigkeit durch das Rückschlagventil 8 verhindert wird.

**Fig.4** zeigt beispielhaft und schematisch die Notlöseeinrichtung 1 aus Fig.2 in ihrer ungelösten Grundstellung für den manuell bewirkten Notlösebetrieb. Bei Ausfall der Spannungsversorgung oder Versagen des elektromagnetisch betätigbaren 3/2-Wege-Notlöse-Selektionsventil mit Federrückstellung 9 kann bei einer erfindungsgemäßen Notlöseeinrichtung 1 auch ein Notlösen einer bestimmten Bremse oder Bremsengruppe erfolgen. Die Stellung der Ventile 9, 10 entspricht jener der Grundstellung für die fernbediente Notlösung.

**Fig.5** zeigt beispielhaft und schematisch die Notlöseeinrichtung 1 aus Fig.4 in ihrer manuellen Lösestellung. Dabei ist das 3/2-Wege-Notlöse-Selektionsventil mit Federrückstellung 9 in seiner Stellung unverändert, da eben eine Fernbedienung dieses Ventils 9 nicht möglich ist. Das manuell betätigbare 3/2-Wege-Notlöse-Absperrventil 10 ist so geschaltet, dass es eine Verbindung zwischen der Notlösehydraulikleitung 5 und der Lösedruckleitung 6 bildet, sodass Hydraulikdruck zu den zu lösenden Bremsen gelangen kann. Das 3/2-Wege-Notlöse-Absperrventil 10 ist als manuell bedienbaren Ventil in unmittelbarer Nähe der zu lösenden Bremsen ausgeführt.

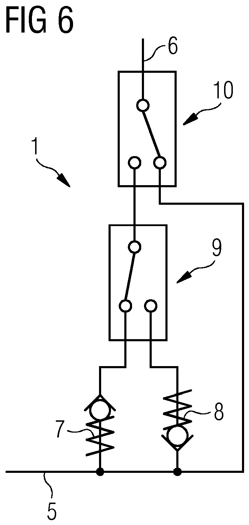

**Fig.6** zeigt beispielhaft und schematisch eine Notlöseeinrichtung 1 mit direkter Zuführung des Notlösedrucks an das 3/2-Wege-Notlöse-Absperrventil 10. Es ist eine Ausführungsform der Erfindung dargestellt, bei welcher der in der Notlösehydraulikleitung 5 herrschende hydraulische Druck unmittelbar an einen Schalteingang des 3/2-Wege-Notlöse-Absperrventil 10 geführt ist. Das Rückschlagventil 8 ist in dieser Ausführungsform zwischen der Notlösehydraulikleitung 5 und einem Schalteingang des 3/2-Wege-Notlöse-Selektionsventil mit Federrückstellung 9 angeordnet. Somit ist es erforderlich, den Druck in der Notlösehydraulikleitung 5 so lange aufrechtzuerhalten wie eine Notlösung vorgenommen werden soll. Die Ventile 9, 10 sind in die für eine manuelle Notlösung erforderliche Position gestellt.

### Liste der Bezeichnungen

- 1: Notlöseeinrichtung
- 2: Erster Hydraulikzylinder
- 3: Zweiter Hydraulikzylinder
- 4: Hydraulikpumpe
- 5: Notlösehydraulikleitung
- 6: Lösedruckleitung
- 7: Erstes Rückschlagventil
- 8: Zweites Rückschlagventil
- 9: 3/2-Wege-Notlöse-Selektionsventil mit Federrückstellung
- 10: 3/2-Wege-Notlöse-Absperrventil
- 11: Manuelle Betätigung
- 12: Bremsscheibe
- 13: Bremslösehydraulikpumpe

## Patentansprüche

1. Notlöseeinrichtung (1) für eine Federspeicherbremse eines Schienenfahrzeugs, umfassend eine Hydraulikpumpe (4) und je zu lösender Federspeicherbremse einen Hydraulikzylinder (2, 3), sowie Hydraulikleitungen (5, 6) zwischen der Hydraulikpumpe (4) und der Federspeicherbremse,
**dadurch gekennzeichnet, dass** in zu einer Gruppe gemeinsam zu lösenden Federspeicherbremsen führenden Notlösehydraulikleitung (5) zwei antiparallel geschaltete Rückschlagventile (7, 8) angeordnet sind, deren Ausgänge jeweils an einen Schaltanschluß eines elektromagnetisch betätigbaren 3/2-Wege-Notlöse-Selektionsventil mit Federrückstellung (9) geführt sind, wobei der Wurzelanschluß des 3/2-Wege-Notlöse-Selektionsventils mit Federrückstellung (9) an einen Schaltanschluß eines manuell betätigbaren 3/2-Wege-Notlöse-Absperrventils (10) geführt ist, und wobei die Notlösehydraulikleitung (5) über jenes Rückschlagventil (8), welches einen Fluss von Hydraulikfluid in Richtung der Hydraulikzylinder (2, 3) zulässt und in der Gegenrichtung sperrt, an den weiteren Schaltanschluß des 3/2-Wege-Notlöse-Absperrventils (10) geführt ist, und wobei der Wurzelanschluß des 3/2-Wege-Notlöse-Absperrventils (10) an die Hydraulikzylinder (2, 3) der in einer Gruppe gemeinsam zu lösenden Federspeicherbremsen geführt ist.

2. Notlöseeinrichtung (1) nach Anspruch 1,
**dadurch gekennzeichnet, dass** das elektromagnetisch betätigbare 3/2-Wege-Notlöse-Selektionsventil mit Federrückstellung (9) in stromlosem Zustand den Fluß von Hydraulikfluid zu den zu einer Gruppe gemeinsam zu lösenden Federspeicherbremsen sperrt.

3. Notlöseeinrichtung (1) nach einem der Ansprüche 1 oder 2,
**dadurch gekennzeichnet, dass** das die zu einer Gruppe gemeinsam zu lösender Federspeicherbremsen die Federspeicherbremsen einer Achse bzw. eines Fahrwerks sind.

4. Notlöseeinrichtung (1) nach einem der Ansprüche 1 bis 3,
**dadurch gekennzeichnet, dass** die Hydraulikpumpe (4) einen elektrischen und einen manuellen Antrieb umfasst.

5. Notlöseeinrichtung (1) nach einem der Ansprüche 1 bis 4,
**dadurch gekennzeichnet, dass** der Hydraulikzylinder (2, 3) eine Baueinheit mit einem Federspeicherzylinder einer Bremse bildet.

6. Notlöseeinrichtung (1) nach einem der Ansprüche 1 bis 5,
**dadurch gekennzeichnet, dass** die Notlöseleitung (5) unmittelbar an einen Schaltanschluß des 3/2-Wege-Notlöse-Absperrventils (10) geführt ist.

7. Schienenfahrzeug, umfassend eine Notlöseeinrichtung (1) nach einem der Ansprüche 1 bis 6.

## Claims

1. Emergency release device (1) for a spring-loaded brake of a rail vehicle, comprising a hydraulic pump (4), and one hydraulic cylinder (2, 3) per spring-loaded brake to be released, and hydraulic lines (5, 6) between the hydraulic pump (4) and the spring-loaded brake,
**characterized in that** two check valves (7, 8) which are arranged in antiparallel are arranged in an emergency release hydraulic line (5) which leads to a group of spring-loaded brakes to be released together, the outputs of which check valves (7, 8) are routed in each case to a switching connector of an electromagnetically actuable 3/2-way emergency release selection valve with spring return (9), the common connector of the 3/2-way emergency release selection valve with spring return (9) being routed to a switching connector of a manually actuable 3/2-way emergency release shut-off valve (10), and the emergency release hydraulic line (5) being routed via that check valve (8), which permits a flow of hydraulic fluid in the direction of the hydraulic cylinders (2, 3) and shuts it off in the opposite direction, to the further switching connector of the 3/2-way emergency release shut-off valve (10), and the common connector of the 3/2-way emergency release shut-off valve (10) being routed to the hydraulic cylinders (2, 3) of the spring-loaded brakes which are to be released together in a group.

2. Emergency release device (1) according to Claim 1, **characterized in that,** in the currentless state, the electromagnetically actuable 3/2-way emergency release selection valve with spring return (9) shuts off the flow of hydraulic fluid to the spring-loaded brakes which are to be released together to form one group.

3. Emergency release device (1) according to either of Claims 1 and 2,
**characterized in that** the spring-loaded brakes which are to be released together to form one group are the spring-loaded brakes of an axle or of a bogie.

4. Emergency release device (1) according to one of Claims 1 to 3,
**characterized in that** the hydraulic pump (4) comprises an electric and a manual drive.

5. Emergency release device (1) according to one of Claims 1 to 4,
**characterized in that** the hydraulic cylinder (2, 3) forms one structural unit with a spring energy cylinder of a brake.

6. Emergency release device (1) according to one of Claims 1 to 5,
**characterized in that** the emergency release line (5) is routed directly to a switching connector of the 3/2-way emergency release shut-off valve (10).

7. Rail vehicle, comprising an emergency release device (1) according to one of Claims 1 to 6.

## Revendications

1. Dispositif de desserrage d'urgence (1) pour un frein à ressort d'un véhicule ferroviaire, comprenant une pompe hydraulique (4) et un cylindre hydraulique (2, 3), pour chaque frein à ressort à desserrer, ainsi que des conduites hydrauliques (5, 6) entre la pompe hydraulique (4) et le frein à ressort,
**caractérisé en ce que** deux clapets antiretour (7, 8) mis en circuit de manière antiparallèle sont agencés dans une conduite hydraulique de desserrage d'urgence (5) conduisant à des freins à ressort à desserrer ensemble afin de former un groupe, dont les sorties sont amenées à un raccord de mise en circuit d'une soupape de sélection de desserrage d'urgence à 3/2 voies à commande électromagnétique avec un rappel de ressort (9), dans lequel le raccord de racine de la soupape de sélection de desserrage d'urgence à 3/2 voies est amené avec un rappel de ressort (9) à un raccord de mise en circuit d'une soupape de desserrage d'urgence à 3/2 voies à commande manuelle (10), et dans lequel la conduite hydraulique de desserrage d'urgence (5) est amenée au raccord de mise en circuit supplémentaire de la soupape de desserrage d'urgence à 3/2 voies (10) par l'intermédiaire de ce clapet antiretour (8) qui permet un écoulement de fluide hydraulique dans la direction des cylindres hydrauliques (2, 3) et qui le bloque dans la direction opposée, et dans lequel le raccord de racine de la soupape de desserrage d'urgence à 3/2 voies (10) est amené aux cylindres hydrauliques (2, 3) des freins à ressort à desserrer ensemble afin de former un groupe.

2. Dispositif de desserrage d'urgence (1) selon la revendication 1,
**caractérisé en ce que** la soupape de sélection de desserrage d'urgence à 3/2 voies à commande électromagnétique avec rappel par ressort (9), à l'état sans courant, bloque l'écoulement de fluide hydraulique vers les freins à ressort qui doivent être desserrés de manière conjointe afin de former un groupe.

3. Dispositif de desserrage d'urgence (1) selon l'une des revendications précédentes 1 ou 2,
**caractérisé en ce que** les freins à ressort à desserrer ensemble afin de former un groupe sont les freins à ressort d'un essieu ou d'un châssis.

4. Dispositif de desserrage d'urgence (1) selon l'une quelconque des revendications précédentes 1 à 3,
**caractérisé en ce que** la pompe hydraulique (4) comprend un entraînement électrique et un entraînement manuel.

5. Dispositif de desserrage d'urgence (1) selon l'une quelconque des revendications précédentes 1 à 4,
**caractérisé en ce que** le cylindre hydraulique (2, 3) forme une unité de construction avec un cylindre à ressort accumulateur.

6. Dispositif de desserrage d'urgence (1) selon l'une quelconque des revendications précédentes 1 à 5,
**caractérisé en ce que** la conduite de desserrage d'urgence (5) est amenée directement à un raccord de mise en circuit de la soupape de desserrage d'urgence à 3/2 voies (10).

7. Véhicule ferroviaire comprenant un dispositif de desserrage d'urgence (1) selon l'une quelconque des revendications précédentes 1 à 6.
